# EUROPEAN PATENT APPLICATION

(11) **EP 1 303 060 A1**
(43) Date of publication of application: **16.04.2003**
(21) Application number: 01124470.4
(22) Date of filing: 11.10.2001
(51) Int. Cl.: H04B 7/08

(54) **Receive beam forming with shared phase estimation**

(71) Applicant: Sony International (Europe) GmbH, 10785 Berlin (DE)
(72) Inventor: Nöthlings, Rolf, Sony International (Europe) GmbH, 70327 Stuttgart (DE); Wildhagen, Jens, Sony International (Europe) GmbH, 70327 Stuttgart (DE); Schill, Dietmar, Sony International (Europe) GmbH, 70327 Stuttgart (DE)
(74) Representative: Müller - Hoffmann & Partner

(57) **Abstract**

A beam forming unit for receivers comprising at least two antennas (1,2) is introduced. By evaluating the phases (25,26) of the received signals in each antenna signal path, it is possible to determine the phase offsets (ΔΦ) between the antenna signal paths. At least one of the antenna signal paths comprises phase shifting means for shifting the phases of the received signals according to said phase offsets (ΔΦ). The baseband signals (19, 20) obtained via the various antenna signal paths are now phase coherent and can be added in order to form a combined signal (28), which is forwarded to the demodulation unit (29). The phase estimation means for the various antenna signal paths are preferably realized as shared phase estimation means (21,22) which are operated in a multiplex mode.

## Description

The invention is related to a beam forming unit, in particular to a beam forming unit for a receiver supporting at least two antennas. Furthermore, the invention is related to a method for combining signals received via at least two antenna signal paths to a combined signal.

Low-cost radio receivers often comprise only one antenna for receiving radio signals. The well-known disadvantage of such radio receiver is that fluctuations in the strength of the received radio signal occur rather frequently. The reason for this phenomenon, which is called "fading", is the multipath-characteristic of radio signal propagation. Due to this multipath-propagation, destructive interference of the radio signals might occur exactly at the position in space where the antenna is located, and this causes a decrease in the strength of the received signal.

In order to avoid fading, it is advantageous to build receivers comprising two or more antennas. When the antennas are located λ/2 apart from each other, with λ denoting the wavelength of the received signal, the best results are achieved. When the signal intensity of the signal received by the first antenna is bad, the second antenna gets a good signal, and vice versa. Especially radio receivers built for car stereo applications might comprise more than one antenna, because the distortions caused by the fading phenomenon can strongly be decreased.

In a receiver comprising two or more antennas, the fluctuations due to fading can be reduced. Besides that, by combining the signals received via different antennas, a performance gain of 3 dB is achieved for two antennas. In case of more antennas a higher gain is possible.

When the radio signals of a certain transmitter are received by two distant antennas A and B, the signal received by antenna A is slightly phase-shifted with respect to the signal received by antenna B, depending on the direction of the transmitter. When the two signals are combined, their phase and their amplitude have to be taken into account. This is called beam forming. Receivers supporting antenna diversity of at least two antennas are capable to apply beam forming, and thus, it is possible to consider a transmitter's position relative to the antennas. Beam forming means that the signals of at least two antennas are combined taking their phase and their amplitude into account.

In the article "A Primer on Digital Beamforming" by Toby Haynes, Spectrum Signal Processing, March 26, 1998, an overview over various techniques for determining the complex weights wk for the signals sk(t) received by the various antennas are described. Adaptive beamforming is the process of altering the complex weights on-the-fly to maximize the quality of the communication channel.

It is an object of the invention to provide a beam forming unit and a method for combining signals which is capable of combining signals received via a multitude of antennas efficiently with a minimum amount of hardware.

The object of the invention is solved by a beam forming unit according to claim 1, by a receiver according to claim 16, and by a method for combining signals received via at least two antenna signal paths to a combined signal according to claim 18. A computer program product according to the present invention is defined in claim 28.

The beam forming unit comprises at least two antennas for receiving signals, and for each antenna, an antenna signal path comprising frequency correction means for transforming the received signals into baseband signals. Furtheron, the beam forming unit comprises, in each antenna signal path, phase estimation means for determining the phases of the baseband signals received via the respective antenna path. Said phase estimation means for the at least two antenna signal paths are realized as shared phase estimation means which are operated in a multiplex mode. The beam forming unit comprises a processing unit for comparing the phases of the baseband signals received via the at least two antenna signal paths in order to determine the phase offsets between the at least two antenna signal paths. In at least one of the antenna signal paths, phase shifting means are provided for shifting the phases of the received signals according to said phase offsets determined by the processing unit.

First, the phases of the received signals are determined in each of the plurality of antenna signal paths. Then, the processing unit calculates the differences between the phases and thus determines the phase offsets between the various antenna signal paths. At least one of the antenna signal paths comprises phase shifting means for compensating the phase offsets between the various antenna paths. The phase offsets are forwarded from the processing unit to the phase shifting means.

By compensating the phase offsets between the various antenna signal paths, all the baseband signals appearing at the outputs of the antenna signal paths are phase coherent. Adding the baseband signals of the various antenna signal paths will give a combined signal with high signal strength and with improved signal-to-noise ratio. By combining the signals provided by the various antenna signal paths, a performance gain of 3 dB is achieved for two antennas.

In each antenna signal path, the phase of the received signals has to be determined. Instead of providing each antenna signal path with dedicated phase estimation means, one phase estimation unit is shared between the various antenna signal paths. The phase estimation unit is operated in a multiplex mode. First, it determines the phase of the baseband signal of the first antenna signal path. Next, the phase estimation unit is connected to the second antenna signal path and determines the phase of the received signal in the second antenna path, etc. The multiplexing may be controlled by a control clock signal. With each control clock cycle, the shared phase estimation unit is connected to a different antenna signal path.

Instead of implementing one phase estimation unit for each antenna signal path, only one shared phase estimation unit, together with the multiplexing means, has to be provided. The amount of hardware that is necessary for implementing the inventive beam forming unit is minimized. Both the complexity and the cost of the integrated circuit is reduced.

The inventive solution allows to implement beam forming in a receiver supporting at least two antennas. By setting the phase shifts in the various antenna signal paths in a way that all the output signals of the various antenna signal paths are in phase, the set of antennas is in fact directed towards the source of the received signal. The inventive solution allows for a low-cost implementation of beam forming.

According to a preferred embodiment of the invention, said phase offsets between the at least two antenna signal paths are determined by calculating the moving average of the phase differences between the phases of the baseband signals received via the at least two antenna signal paths. By-calculating the moving average, both the actual phase difference and the preceding phase differences are considered. By determining the average of the actual phase difference and of former phase differences, the phase offsets are changed slowly and smoothly. Abrupt changes of the phase shifts in the various antenna signal paths are avoided. The direction in which the set of antennas is oriented is changed smoothly. The averaging procedure helps to keep track of the transmitter's location.

Preferably, said shared phase estimation means are realized as a CORDIC unit which utilizes a CORDIC algorithm for determining the phase of the respective signal. The CORDIC algorithm (COordinate Rotating Digital Computing) is an iterative algorithm that is capable of determining the phase of a complex signal. In each iteration step i (i=1,2, ...,n), the angular increment Δϕᵢ = δᵢ·arctan(2⁻ⁱ) is added, either with a positive sign (δᵢ·= +1, clockwise rotation) or with a negative sign (δᵢ·= -1, counterclockwise rotation) to the complex signal's phase angle. The adding of angular increments is continued until the abscissa is reached. The abscissa is reached as soon as the imaginary part of the rotated pointer is zero. The phase angle is equal to the total rotation angle, which is the sum over all the angular increments: ϕ = Σ (Δϕᵢ).

The CORDIC algorithm only uses the operations bit pattern shifting, adding, and accessing a lookup table comprising 14 values. For this reason, the CORDIC algorithm is well-suited for an implementation in hardware. A CORDIC unit is therefore the most efficient way of implementing phase estimation means in hardware. Another advantage is that the CORDIC algorithm is a fast algorithm which converges rapidly.

Preferably, the beam forming unit comprises means for combining the baseband signals received via the at least two antenna signal paths in order to form a combined signal. Because the baseband signals received via the at least two antenna signal paths have been phase-shifted such that they are in phase, a signal with improved signal strength and with an improved signal-to-noise ratio can be obtained by combining them. Preferably, said means for combining the baseband signals are implemented as an adder circuit which adds the phase-shifted baseband signals obtained from the at least two antenna signal paths.

According to a preferred embodiment of the invention, the beam forming unit comprises a FM demodulation unit with phase estimation means for periodically determining the phase of said combined signal in order to demodulate said combined signal. The combined signal is used as a starting point for the signal demodulation. The demodulation unit periodically determines the phase and the amplitude of the combined signal. The data obtained in the demodulation unit is used for further audio signal processing.

Preferably, the phase estimation means in the demodulation unit are realized as CORDIC units which utilize a CORDIC algorithm for periodically determining the phase of the combined signal. In the antenna signal paths, the shared CORDIC unit has been utilized for determining the phase offsets between the antenna signal paths. In a FM demodulator a CORDIC unit is used for demodulating the combined signal. In order to demodulate a signal, the signal's phase and the signal's amplitude have to be determined once every sampling clock cycle. A CORDIC unit is the most efficient way of implementing phase estimation means in hardware. Therefore, the FM demodulation unit comprises a CORDIC unit for periodically determining the combined signal's phase.

According to a preferred embodiment of the invention, said phase estimation means for the at least two antenna signal paths and said phase estimation means in the demodulation unit are realized as shared phase estimation means which are operated in a multiplex mode. According to this embodiment, only one phase estimation unit is used for determining the phase offsets between the various antenna signal paths and for demodulation the combined signal. Multiplexing means connect the phase estimation unit with the first antenna signal path for measuring the phase there. Then, the phase estimation unit is connected with the second antenna signal path for measuring the phase. After the phases in the antenna signal paths have been measured, the phase estimation unit is connected with the combined signal in order to sample the combined signal's phase. A prerequisite for utilizing one phase estimation unit for different tasks is that the sampling rate of the demodulation unit is sufficiently slow, because during one sampling clock cycle, the phase evaluation has to be carried out several times. The advantage of this embodiment is that beam forming and signal demodulation can be carried out with one shared phase estimation unit.

Preferably, the CORDIC units in the at least two antenna signal paths and the CORDIC unit in the demodulation unit being realized as one shared CORDIC unit which is operated in a multiplex mode. The CORDIC algorithm is a fast algorithm, and therefore there are no severe restrictions to the sampling rate of the demodulation unit. All the phase determinations can be carried out with only one CORDIC unit.

Preferably, said frequency correction means in the at least two antenna signal paths comprise signal mixing units which multiply the received signals with sinusoidal signals. In this embodiment, the received signal, which has already been transformed to an intermediate frequency, is converted into a baseband signal by means of a signal mixing unit. Said mixing unit multiplies the received signal with a sinusoidal signal which oscillates with the intermediate frequency. The sinusoidal signal is generated by a local oscillator. As a result of the signal mixing, a high-frequency signal and the desired baseband signal are obtained. The high-frequency signal can be suppressed by means of a lowpass filter.

According to an alternative embodiment of the invention, said frequency correction means comprise CORDIC units which determine the phase of the received signal with respect to a rotating reference phase. Here, a CORDIC unit is used for transforming a received signal from the intermediate frequency to the baseband. This is achieved by adapting the phase of the received signal with a rotating reference phase, with the rotation frequency of the reference phase being the intermediate frequency. A CORDIC unit can be implemented with a small amount of hardware; it is much easier to implement a CORDIC unit than to implement a complex multiplier with look-up table to set the frequency and the phase of the mixer, which is used in a mixing unit.

Preferably, said rotating reference phase is obtained by periodically incrementing a reference phase value by a fixed angular increment. Once every sampling clock cycle, the reference phase value is incremented by a fixed amount.

Preferably, the rotating reference phases of the frequency correction means in the at least two antenna signal paths are incremented synchronously, controlled by a common control clock.

Preferably, said phase shifting means are realized as adders which increment the CORDIC unit's rotating reference phase by said phase offset. When the frequency correction means are implemented as CORDIC units with a rotating reference phase, it is very easy to implement the phase shifting means. An adder has to be provided which once adds the phase offset ΔΦ to the reference phase value. By doing this, it can be achieved that the baseband signals obtained from the various antenna signal paths are in phase.

Preferably, a receiver comprising a beam forming unit according to the invention receives radio signals according to one of the standards AM radio, FM radio, DRM, DAB. In the standards AM radio and FM radio, the transmitter still transmits the radio signals as analog signals, while in the standards DRM (Digital Radio Mondial) and DAB (Digital Audio Broadcasting), the radio signals are transmitted as digital data. The inventive beam forming realization can be used with both types of standards.

Further features and advantages of preferred embodiments according to the present invention will be explained below in conjunction with the accompanying drawings, in which
- Fig. 1: shows a first embodiment of the invention, whereby the frequency correction means for transforming the received signal to a baseband signal are realized as complex multipier units; and
- Fig. 2: shows a second embodiment of the invention, whereby the frequency correction means for transforming the received signal to a baseband signal are realized as CORDIC units.

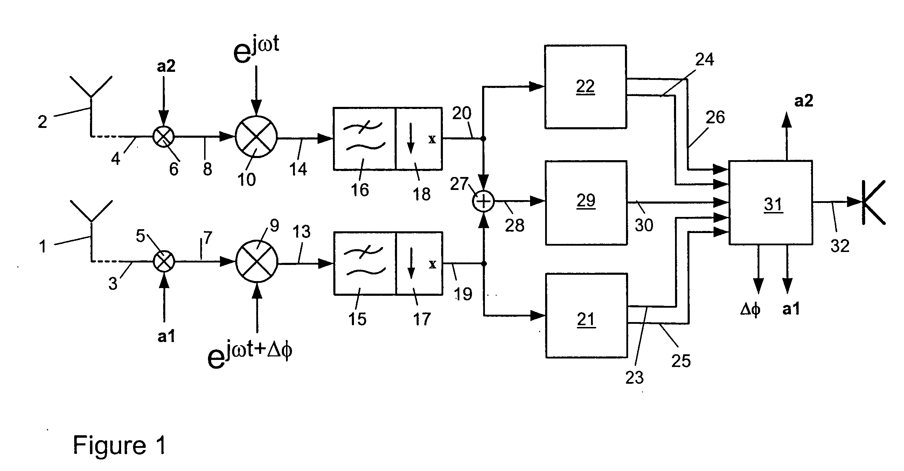

In Fig. 1, a block diagram of a receiver comprising two antennas 1 and 2 is shown. The RF signals received via the antennas 1 and 2 have been converted to the intermediate frequency signals 3 and 4. In the gain control 5, which is part of the first antenna signal path, the amplitude of the intermediate signal 3 is adjusted according to the gain control value a1. The gain control 6 is part of the second antenna signal path and adjusts the amplitude of the intermediate frequency signal 4, whereby the gain is set by the gain control value a2. The adjusted signal 7 is forwarded from the gain control 5 to the mixing unit 9. In the second antenna signal path, the adjusted signal 8 is forwarded from the gain control 6 to the mixing unit 10. An adequate control of the gain control is necessary to achieve a high performance gain of the beam forming realization.

In the mixing unit 9, the adjusted signal 7 is multiplied with the signal 11, e^{iωt+ΔΦ}, with ω being the intermediate frequency and with ΔΦ being an additional phase offset. As a result of the complex multiplication, the complex signal 13 is obtained. In the mixing unit 10, which is part of the second antenna signal path, the adjusted signal 8 is multiplied with the signal 12, e^{iωt}, to generate the complex signal 14.

The complex signals 13 and 14 contain two spectral components, a high-frequency component and the desired baseband signal. In the lowpass filters 15 and 16, the high-frequency components are suppressed. The downsampling units 17 and 18 reduce the sampling rate of the signals. At the output of the downsampling unit 17 in the first antenna signal path, the downsampled baseband signal 19 is obtained, which is forwarded to the CORDIC unit 21. The CORDIC unit 21 uses the CORDIC algorithm for determining the amplitude 23 and the phase 25 of the downsampled baseband signal 19. Accordingly, in the second antenna signal path, the downsampled baseband signal 20 is obtained at the output of the downsampling unit 18. The downsampled baseband signal 20 is forwarded to the CORDIC unit 22, which determines the amplitude 24 and the phase 26 of the downsampled baseband signal 20.

The CORDIC unit 21 for the first antenna signal path, the CORDIC unit 22 for the second antenna signal path, and the phase estimation means of the demodulation unit 29 are realized as one shared CORDIC unit which is used in a multiplex mode. Because of the downsampling units 17 and 18, the sampling rate is sufficiently low. During one sampling clock cycle, the shared CORDIC unit first determines the phase 25 of the downsampled baseband signal 19 in the first antenna signal path. Then, the shared CORDIC unit determines the phase 26 of the downsampled baseband signal 20 in the second antenna signal path. Then, the shared CORDIC unit is used for demodulating the combined signal 28 and determines the phase of the combined signal 28.

The amplitude 23 and the phase 25 of the signal received via the first signal path, and the amplitude 24 and phase 26 of the signal received via the second signal path are forwarded to the digital signal processor 31. The digital signal processor 31 compares the phase 25 and the phase 26 and calculates the phase difference ΔΦ of these two phases 25 and 26. The phase offset ΔΦ determines the additional phase shift of the signal 11, e^{iωt+ΔΦ}, which is multiplied with the adjusted signal 7. Thus, it is possible to compensate the phase offset between the first and the second antenna signal path.

Besides calculating the phase offset ΔΦ between the two antenna signal paths, the digital signal processor 31 also generates the gain control values a1 and a2. The gain of the gain control 5 is set by the value a1, and the gain of the gain control 6 is set by the value a2. The respective gain control values are chosen such that the amplitudes of the received signals of the various antenna signal paths are brought to a predefined magnitude. In case the fading phenomenon causes a very small intensity of a signal received via a certain antenna, the amplitude of said signal is not amplified, though.

Because of the additional phase shift ΔΦ in the first antenna signal path, the downsampled baseband signal 19 in the first antenna signal path is exactly in phase with the downsampled baseband signal 20 in the second antenna signal path. The adder 27 adds the two signals 19 and 20 and generates the combined signal 29. This combined signal 28 is forwarded to the demodulation unit 29. By means of the shared CORDIC unit, the phase and the amplitude of the combined signal 28 is determined once in every sampling clock cycle. The phase and amplitude information 30 is forwarded to the digital signal processor 31 and is used as the basic data for further audio signal processing in the audio signal path 32.

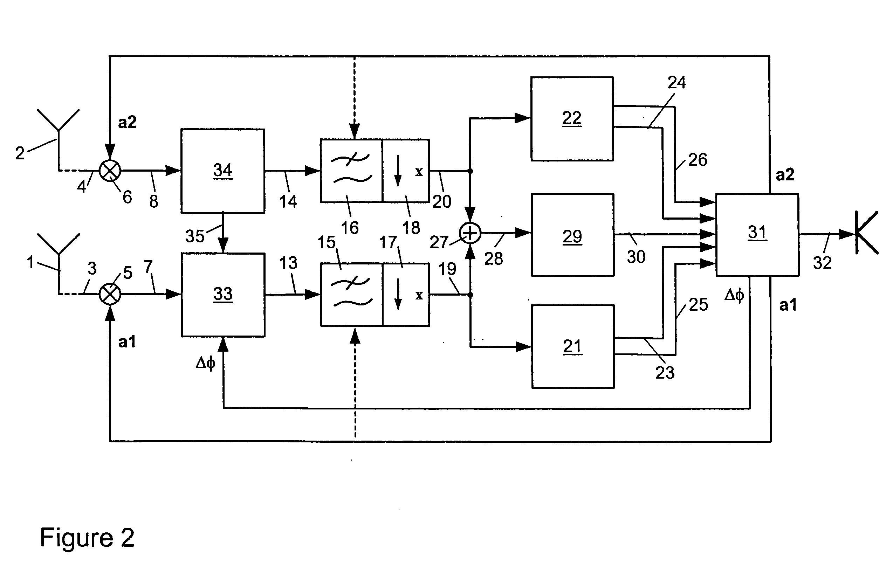

In Fig. 2, an alternative embodiment of the beam forming unit is shown. In this embodiment, the transformation of the intermediate frequency signals 3 and 4 to the baseband is carried out in a different way than in Fig. 1. Instead of the mixing unit 9, a CORDIC unit 33 with a rotating reference phase is used in the first antenna signal path. In the second antenna signal path, instead of the mixing unit 10, a CORDIC unit 34 with a rotating reference phase is employed. The frequency of rotation of the reference phase is equal to the intermediate frequency. The CORDIC unit 33 determines the phase angle between the phase of the adjusted signal 7 and a rotating reference phase. Because of the rotation of the reference phase, the adjusted signal 7, which oscillates with the intermediate frequency, is converted to the baseband. Therefore, at the output of the CORDIC unit 33, the complex baseband signal 13 is obtained. In the second antenna signal path, the CORDIC unit 34 determines the phase angle between the phase of the adjusted signal 8 and a rotating reference phase. The adjusted signal 8 is converted to the baseband, and at the output of the CORDIC unit 34, the complex baseband signal 14 is obtained.

The rotating reference phase is generated by periodically incrementing a reference phase value by the angular increment ω·ΔT_{S}, whereby ω denotes the intermediate frequency, and whereby T_{S} denotes the sampling period. Once every sampling clock cycle, the reference phase value is incremented by said angular increment. The rotating reference phase can be generated by an integrator which augments the reference value once every sampling period. The reference phase values of the CORDIC units 33 and 34 have to be updated synchronously. In order to achieve this, sync information 35 is exchanged between the CORDIC unit 33, which belongs to the first antenna signal path, and the CORDIC unit 34, which belongs to the second antenna signal path. According to an alternative solution, only one of the CORDIC units 33 and 34 comprises an integrator for generating and maintaining said phase reference value. The second CORDIC unit, which does not comprise an integrator, obtains the phase reference value from the first CORDIC unit.

When CORDIC units with rotating reference phase are used for frequency correction, it is possible to consider an additional phase offset ΔΦ, which has been determined by the digital signal processor 31. In order to compensate this phase offset ΔΦ between the first and the second antenna signal path, said phase offset ΔΦ is added once to the reference phase value maintained in the CORDIC unit 33.

## Claims

1. Beam forming unit, **characterized by**
- at least two antennas (1,2) for receiving signals,
- for each antenna (1,2), an antenna signal path comprising frequency correction means for transforming the received signals (7,8) into baseband signals (19,20),
- in each antenna signal path, phase estimation means (21,22) for determining the phases (25,26) of the baseband signals received via the respective antenna path, whereby said phase estimation means for the at least two antenna signal paths are realized as shared phase estimation means (21,22) which are operated in a multiplex mode,
- a processing unit (31) for comparing the phases (25,26) of the baseband signals received via the at least two antenna signal paths in order to determine the phase offsets (ΔΦ) between the at least two antenna signal paths,
- in at least one of the antenna signal paths, phase shifting means for shifting the phases of the received signals according to said phase offsets (ΔΦ) determined by the processing unit (31).

2. Beam forming unit according to claim 1, **characterized in that** said phase offsets (ΔΦ) between the at least two antenna signal paths are determined by calculating the moving average of the phase differences between the phases (25,26) of the baseband signals received via the at least two antenna signal paths.

3. Beam forming unit according to claim 1 or claim 2, **characterized by** said shared phase estimation means (21,22) being realized as a CORDIC unit which utilizes a CORDIC algorithm for determining the phase (25,26) of the respective signal.

4. Beam forming unit according to any of the preceding claims, **characterized by** means (27) for combining the baseband signals (19,20) received via the at least two antenna signal paths in order to form a combined signal (28).

5. Beam forming unit according to claim 4, **characterized by** a FM demodulation unit (29) comprising phase estimation means for periodically determining the phase of said combined signal (28) in order to demodulate said combined signal (28).

6. Beam forming unit according to claim 5, **characterized by** said phase estimation means in the demodulation unit (29) being realized as CORDIC units which utilize a CORDIC algorithm for periodically determining the phase of the combined signal (28).

7. Beam forming unit according to any of the preceding claims, **characterized by** said phase estimation means (21,22) for the at least two antenna signal paths and said phase estimation means in the demodulation unit (29) being realized as shared phase estimation means which are operated in a multiplex mode.

8. Beam forming unit according to claim 7, **characterized by** the CORDIC units in the at least two antenna signal paths and the CORDIC unit in the demodulation unit (29) being realized as one shared CORDIC unit which is operated in a multiplex mode.

9. Beam forming unit according to any of the preceding claims, **characterized in that** said frequency correction means in the at least two antenna signal paths comprise signal mixing units (9,10) which multiply the received signals (7,8) with sinusoidal signals.

10. Beam forming unit according to anyone of claims 1 to 8, **characterized in that** said frequency correction means comprise CORDIC units (33,34) which adapt the phase of the received signal with respect to a rotating reference phase.

11. Beam forming unit according to claim 10, **characterized in that** said rotating reference phase is obtained by periodically incrementing a reference phase value by a fixed angular increment.

12. Beam forming unit according to claim 10 or claim 11, **characterized in that** the rotating reference phases of the frequency correction means in the at least two antenna signal paths are incremented synchronously, controlled by a common control clock.

13. Beam forming unit according to any of claims 10 to 12, **characterized by** said phase shifting means being realized as adders which increment the CORDIC unit's (33) rotating reference phase by said phase offset (ΔΦ).

14. Beam forming unit according to any of the preceding claims, **characterized by** each of the antenna signal paths comprising a gain control unit (5,6) for adjusting the gain of the signal received via the respective antenna signal path.

15. Beam forming unit according to claim 14, **characterized in that** the respective gain control values (a1,a2) are determined by the processing unit (31) as a function of the amplitudes (23,24) of the signals received via the at least two antenna signal paths.

16. Receiver comprising a beam forming unit according to anyone of claims 1 to 15.

17. Receiver according to claim 16, with said receiver receiving radio signals according to one of the standards AM radio, FM radio, DRM, DAB.

18. Method for combining signals received via at least two antenna signal paths to a combined signal (28), **characterized by** the following steps:
- in each antenna signal path, transforming the signals (7,8) received via the respective antenna (1,2) into baseband signals (19,20);
- determining the phases (25,26) of the baseband signals received via the at least two antenna signal paths by operating phase estimation means (21,22) which are shared between the antenna signal paths in a multiplex mode;
- comparing the phases (25,26) of the baseband signals (19,20) received via the at least two antenna signal paths in order to determine the phase offsets (ΔΦ) between the at least two antenna signal paths;
- shifting the phases of the received signals according to said phase offsets (ΔΦ) in at least one of the antenna signal paths;
- combining the phase-shifted signals (19,20) received via the at least two antenna signal paths to a combined signal (28).

19. Method according to claim 18, **characterized by** determining the phase offsets (ΔΦ) between the at least two antenna signal paths by calculating the moving average of the phase differences between the phases (25,26) of the baseband signals received via the at least two antenna signal paths.

20. Method according to claim 18 or claim 19, **characterized by** FM-demodulating said combined signal (28) by periodically determining the phase of said combined signal (28).

21. Method according to claim 20, **characterized by** periodically determining the phases of said combined signal (28) by operating phase estimation means which are shared between the antenna signal paths and the combined signal (28) in a multiplex mode.

22. Method according to anyone of claims 18 to 21, **characterized by** utilizing a CORDIC algorithm in said shared phase estimation means for determining the phase of the respective signal.

23. Method according to anyone of claims 18 to 22, **characterized by** transforming the signals received via the respective antenna (1,2) into baseband signals (19,20) by multiplying said received signals (7,8) with sinusoidal signals.

24. Method according to anyone of claims 18 to 22, **characterized by** transforming the signals received via the respective antenna (1,2) into baseband signals (19,20) by adapting, with the CORDIC algorithm, the phase of said received signals (7,8) with respect to a rotating reference phase.

25. Method according to claim 24, **characterized in that** said rotating reference phase is obtained by periodically incrementing a reference phase value by a fixed angular increment.

26. Method according to claim 24 or claim 25, **characterized in that** the rotating reference phases for the at least two antenna signal paths are incremented synchronously, controlled by a common control clock.

27. Method according to anyone of claims 24 to 26, **characterized in that** shifting the phases of the received signals (7) according to said phase offsets (ΔΦ) in at least one of the antenna signal paths is effected by adding said phase offset (ΔΦ) to the rotating reference phase of the respective antenna signal path.

28. Computer program product, comprising computer program means adapted to at least partly peform the method steps as defined in anyone of claims 18 to 27 and/or to at least partly embody the beam forming unit or the receiver as defined in anyone of claims 1 to 17.
